# EUROPEAN PATENT SPECIFICATION

(11) **EP 2 915 864 B1**
(45) Date of publication and mention of the grant of the patent: **28.06.2017**
(21) Application number: 12887690.1
(22) Date of filing: 31.10.2012
(51) Int. Cl.: C09K 11/59, C09K 11/87

(54) **SILICATE LUMINESCENT MATERIAL AND PREPARATION METHOD THEREFOR**
LUMINESZENTES SILIKATMATERIAL UND HERSTELLUNGSVERFAHREN DAFÜR
SUBSTANCE LUMINESCENTE À BASE DE SILICE ET SON PROCÉDÉ DE PRÉPARATION

(43) Date of publication of application: 09.09.2015
(73) Proprietor: Ocean's King Lighting Science&Technology Co., Ltd., Shenzhen, Guangdong 518054 (CN); Shenzhen Ocean's King Lighting Engineering Co., Ltd., Shenzhen, Guangdong 518054 (CN)
(72) Inventor: ZHOU, Mingjie, Shenzhen Guangdong 518054 (CN); WANG, Rong, Shenzhen Guangdong 518054 (CN)
(74) Representative: Johnson, Richard Alan
(86) International application number: PCT/CN2012/083878
(87) International publication number: WO 2014/067112

(56) References cited:
- WO-A1-2011/153692
- WO-A1-2012/012938
- CN-A- 1 951 822
- XINMIN ZHANG ET AL: "Color tunable and thermally stable luminescence of Tbdoped LiSrCa(SiO)phosphors", MATERIALS RESEARCH BULLETIN, ELSEVIER, KIDLINGTON, GB, vol. 47, no. 8, 5 April 2012 (2012-04-05), pages 2012-2015, XP028511988, ISSN: 0025-5408, DOI: 10.1016/J.MATERRESBULL.2012.04.010 [retrieved on 2012-04-13]
- XIE, MUBIAO ET AL.: 'Intense Cyan-Emitting of LiZCaSiO4:EuZ+ Under Low-Voltage Cathode Ray Excitation' ELECTROCHEMICAL AND SOLID-STATE LETTERS vol. 14, no. 10, 28 July 2011, pages J69 - J72, XP055251669
- WANG, SHUMEI ET AL.: 'Synthesis and luminescence properties of La2_ RExSn2O7 (RE=Eu and Dy) phosphor nanoparticles' MATERIALS SCIENCE AND ENGINEERING B. vol. 133, 2006, pages 231 - 234, XP 027954064

## Description

### FIELD OF THE INVENTION

The present invention relates to luminescent material technology. More particularly, the invention relates to a preparation method for a silicate luminescent material.

### BACKGROUND OF THE INVENTION

In the 1960s, Ken Shoulder proposed ideas based on field emissive arrays (Field Emissive Arrays, FEAs) electron beam microelectronic devices, thus, to design and produce panel display and light resource devices (Field Emission Display, FED) by using FEAs has drawn the public's attention. Similar to the working principle of conventional cathode ray tube (Cathode Ray Tube, CRT), such new field emission display lights and forms images by electron beam bombardment on red, green blue trichromatic fluorescent powder. Field emission display has potential advantages in luminance, visual angle, response time, working temperature range, energy consumption and other aspects.

A key factor to prepare field emission display of high performances is to prepare luminescent material of excellent performance. Zhang et al. report a Li₄SrCa(SiO₄)₂:xTb³⁺ phosphor (Color tunable and thermally stable luminescence of Tb³⁺ doped Li₄SrCa(SiO₄)₂ phosphors). WO 2012/012938 also discloses a luminescent material Ln₂SiO₅:Tb, M. At present, luminescent material provided in field emission display are commonly luminescent material of traditional cathode ray tube and projection television kinescope, such as sulfide series, and oxysulfide series luminescent material. As for sulfide series and oxysulfide series luminescent material, they have high luminance and electrical conductivity, but, under the large electron beam bombardment, they prone to decompose into elemental sulfur, which can poison the tip of cathode and produce other precipitates covering the luminescent material, so as to reduce the luminescent efficiency of luminescent material, and shorten the life of a field emission display.

### SUMMARY OF THE INVENTION

In view of this, the present invention provides a preparation method for a silicate luminescent material and discloses said silicate luminescent material, which has high luminescent intensity and good stability.

A silicate luminescent material, wherein said silicate luminescent material has a general molecular formula of Li₂Ca₁₋ₓSiO₄:Tbₓ,M_{y}, M is selected from at least one of Ag, Au, Pt, Pd, and Cu metal nanoparticles, x is in a range of 0< x≤0.2, M is doped in the silicate luminescent material, and y is a molar ratio of M to Si and y is in a range of 0<y ≤1 × 10⁻² is disclosed.

In one embodiment, x is in a range of 0.02≤x≤0.10.

In one embodiment, y is in a range of 1×10⁻⁵≤y≤5×10⁻³.

A method for preparing a silicate luminescent material, comprising:
preparing collosol containing M, said M is selected from at least one of Ag, Au, Pt, Pd, and Cu metal nanoparticles;
mixing said collosol containing M and silicon dioxide aerogel to obtain mixture solution, stirring said mixture solution and then sonicating and drying, grinding solid material obtained from drying, calcining said solid material at 600°C to 1200°C for 0.5 to 4 hours to obtain silicon dioxide aerogel containing M;
selecting source compound of Li, source compound of Ca, source compound of Tb and said silicon dioxide aerogel containing M according to stoichiometric ratios of corresponding elements in general molecular formula of Li₂Ca₁₋ₓSiO₄:Tbₓ,M_{y}, mixing and grinding uniformly to form a mixture material, calcining said mixture material at 500°C to 1000°C for 2 to 15 hours, and reducing said mixture material at 800°C to 1200°C for 0.5 to 6 hours, cooling and grinding to obtain silicate luminescent material has a general molecular formula of Li₂Ca₁-ₓSiO₄:Tbₓ,M_{y}, x is in a range of 0<x≤0.2, M is doped in said Li₂Ca₁₋ₓSiO₄:Tbₓ, and y is a molar ratio of M to Si and y is in a range of 0<y <1 × 10⁻².

In one embodiment of the present invention, said preparing collosol containing M comprising:
mixing at least one solution of salt selected from silver salt solution, gold salt solution, platinum salt solution, palladium salt solution and copper salt solution, with assistant agent and reducing agent to have reaction for 10∼45 minutes to obtain collosol containing M.

In one embodiment of the present invention, a concentration of at least one solution of salt selected from silver salt solution, gold salt solution, platinum salt solution, palladium salt solution and copper salt solution is in a range of 5×10⁻⁴mol/L to 2.5×10⁻²mol/L.

In one embodiment of the present invention, said assistant agent is selected from at least one of polyvinyl pyrrolidone, sodium citrate, cetyl trimethyl ammonium bromide, sodium dodecyl sulfate and sodium dodecyl sulfonate.

A concentration of said assistant agent in collosol containing M is in a range of 1×10⁻⁴g/mL to 5×10⁻²g/mL.

Said reducing agent is selected from at least one of hydrazine hydrate, ascorbic acid, sodium citrate and sodium borohydride.

A molar ratio of said reducing agent to metal ion in at least one solution of salt selected from silver salt solution, gold salt solution, platinum salt solution, palladium salt solution and copper salt solution is in a range of 0.5:1 to 10:1.

In one embodiment of the present invention, said stirring mixture solution and then sonicating and drying comprising: stirring said mixture solution at 50°C to 75°C for 0.5 to 3 hours, and sonicating for 10 minutes, then drying at 60°C to 150°C.

In one embodiment of the present invention, said source compound of Li is one of lithium oxide, lithium carbonate, lithium nitrate, lithium acetate and lithium oxalate, said source compound of Ca is one of calcium oxide, calcium carbonate, calcium nitrate, calcium acetate and calcium oxalate, and said source compound of Tb is one of terbium oxide, terbium carbonate, terbium nitrate, terbium acetate and terbium oxalate.

In one embodiment of the present invention, said reducing at 800°C to 1200°C for 0.5 to 6 hours comprising: reducing under reducing atmosphere at 800°C to 1200°C for 0.5 to 6 hours, and said reducing atmosphere is selected from at least one of mixed gases of N₂ and H₂ reducing atmosphere, CO reducing atmosphere, and H₂ reducing atmosphere.

The metal nanoparticles M which doped in the silicate luminescent material can improve internal quantum efficiency of the luminescent material, thereby improving luminescent intensity of the silicate luminescent material. In addition, the silicate luminescent material can prevent a phenomenon where luminescent efficiency of the luminescent material is reduced because a traditional sulfide and sulfur oxide decompose during use and sediment generated in decomposition covers a surface of the luminescent material, and has high stability.

### BRIEF DESCRIPTION OF THE DRAWINGS

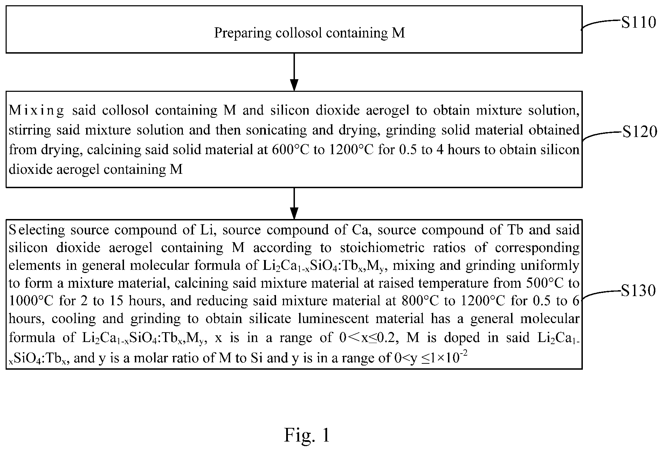

Fig. 1 is a flow chart of the preparation method for silicate luminescent material of one embodiment.
Fig. 2 is a cathodoluminescence spectrum of silicate luminescent material Li₂Ca_{0.90}SiO₄:Tb_{0.10},Ag_{2.5×10}-4 excited by cathode ray under 3kv acceleration voltage in Example 3 with respect to silicate luminescent material Li₂Ca_{0.90}SiO₄:Tb_{0.10} which is tested under the same conditions.

### DETAILED DESCRIPTION OF ILLUSTRATED EMBODIMENTS

Further description of the silicate luminescent material and preparation method therefor will be illustrated combined with embodiments and drawings.

The present disclosure provides a silicate luminescent material, wherein said silicate luminescent material has a general molecular formula of Li₂Ca₁₋ₓSiO₄:Tbₓ,M_{y}.

Wherein, M is selected from at least one of Ag, Au, Pt, Pd, and Cu metal nanoparticles.

X is in a range of 0<x≤0.2, preferably, x is in a range of 0.02≤x≤0.10.

":" refers to doping and replacing, the luminescent material has luminescent substrate Li₂Ca₁₋ₓSiO₄:Tbₓ which is formed by doping Tb which partial replaces Ca in Li₂CaSiO₄ substrate. Trivalent Tb³⁺ ion is used as a luminescent center of the luminescent material.

M is doped in the luminescent substrate Li₂Ca₁₋ₓSiO₄:Tbₓ, and the silicate luminescent material has a general molecular formula of Li₂Ca₁₋ₓSiO₄:Tbₓ,M_{y} is formed by this doping.

Y is a molar ratio of M to Si and y is in a range of 0<y ≤1×10⁻², preferably, y is in a range of 1×10⁻⁵≤y≤5×10⁻³.

The metal nanoparticles M is doped in the silicate luminescent material has a general molecular formula of Li₂Ca₁₋ₓSiO₄:Tbₓ,M_{y}, wherein metal nanoparticles M can improve internal quantum efficiency of the luminescent material, thereby improving luminescent intensity of the silicate luminescent material. In addition, the silicate luminescent material can prevent a phenomenon where luminescent efficiency of the luminescent material is reduced because a traditional sulfide and sulfur oxide decompose during use and sediment generated in decomposition covers a surface of the luminescent material, and has high stability.

In one embodiment of the present invention, a method for preparing a silicate luminescent material, comprising:
Step S110: preparing collosol containing M.

Said M is selected from at least one of Ag, Au, Pt, Pd, and Cu metal nanoparticles.

Said preparing collosol containing M comprising: mixing at least one solution of salt selected from silver salt solution, gold salt solution, platinum salt solution, palladium salt solution and copper salt solution, with assistant agent and reducing agent to have reaction to obtain collosol containing M. On the premise of obtaining collosol containing M, preferably, the reaction time is 10∼45 minutes for consideration of saving energy.

Solution of salt selected from silver salt solution, gold salt solution, platinum salt solution, palladium salt solution and copper salt solution can be chloride solution and nitrate solution of metal ion selected from silver, gold, platinum, palladium and copper. A concentration of at least one solution of salt selected from silver salt solution, gold salt solution, platinum salt solution, palladium salt solution and copper salt solution can be taken according to the actual needs flexiblely, preferably, the concentration of is in a range of 5×10⁻⁴mol/L to 2.5×10⁻²mol/L.

The assistant agent is selected from at least one of polyvinyl pyrrolidone, sodium citrate, cetyl trimethyl ammonium bromide, sodium dodecyl sulfate and sodium dodecyl sulfonate. A concentration of said assistant agent in collosol containing M is in a range of 1×10⁻⁴g/mL to 5×10⁻²g/mL.

The reducing agent is selected from at least one of hydrazine hydrate, ascorbic acid, sodium citrate and sodium borohydride. Preparing solution with reducing agent in which concentration of reducing agent is in range of 1×10⁻⁴mol/L to 1mol/L, and mixing reducing agent, at least one solution of salt selected from silver salt solution, gold salt solution, platinum salt solution, palladium salt solution and copper salt solution, and assistant agent to have reaction.

A molar ratio of said reducing agent to metal ions in at least one solution of salt selected from silver salt solution, gold salt solution, platinum salt solution, palladium salt solution and copper salt solution is in a range of 0.5:1 to 10:1.

With the help of reducing agent and assistant agent, metal ions of Ag , Au, Pt, Pd or Cu are reduced into metal nanoparticles of Ag, Au, Pt, Pd or Cu and dispersed in solvent, to obtain collosol containing M.

Step S120: mixing said collosol containing M and silicon dioxide aerogel to obtain mixture solution, stirring said mixture solution and then sonicating and drying, grinding solid material obtained from drying, calcining said solid material at 600°C to 1200°C for 0.5 to 4 hours to obtain silicon dioxide aerogel containing M.

Mixing said collosol containing M and silicon dioxide aerogel to obtain mixture solution, stirring said mixture solution at 50°C to 75°C for 0.5 to 3 hours, and sonicating for 10 minutes, to let the metal nanoparticles sufficiently adsorbed on silicon dioxide aerogel. Then drying at 60°C to 150°C to remove liquid from silicon dioxide aerogel. Followed is calcination at high temperature in order to remove the liquid completely, to obtain completely dried silicon dioxide aerogel containing M.

Step S130: selecting source compound of Li, source compound of Ca, source compound of Tb and said silicon dioxide aerogel containing M according to stoichiometric ratios of corresponding elements in general molecular formula of Li₂Ca₁₋ₓSiO₄:Tbₓ,M_{y}, mixing and grinding uniformly to form a mixture material, calcining said mixture material at raised temperature from 500°C to 1000°C for 2 to 15 hours, and reducing said mixture material at 800°C to 1200°C for 0.5 to 6 hours, cooling and grinding to obtain silicate luminescent material has a general molecular formula of Li₂Ca₁₋ₓSiO₄:Tbₓ,M_{y}, x is in a range of 0<x≤0.2, M is doped in said Li₂Ca₁₋ₓSiO₄:Tbₓ, and y is a molar ratio of M to Si and y is in a range of 0<y≤1×10⁻².

Source compound of Li is one of lithium oxide, lithium carbonate, lithium nitrate, lithium acetate and lithium oxalate, such as Li₂O, LiCO₃, Li₂C₂O₄.

Said source compound of Ca is one of calcium oxide, calcium carbonate, calcium nitrate, calcium acetate and calcium oxalate, such as CaO, CaCO₃, CaC₂O₄.

Said source compound of Tb is one of terbium oxide, terbium carbonate, terbium nitrate, terbium acetate and terbium oxalate, such as Tb₄O₇, Tb₂(CO₃)₃, Tb₂(C₂O₄)₃.

Using source compound of Li, source compound of Ca, source compound of Tb and silicon dioxide aerogel containing M as raw material, grinding and mixing uniformly before reaction proceed, to have the reaction proceeds more sufficiently. Grinding after twice calcining to make the silicate luminescent material obtained has small particles size and evenly distribution.

Said preparation methods of silicate luminescent material are of simple process, low demand on equipment, no pollution, easy to control, easy to produce in industry.

Special embodiments are disclosed as follows.

### Example 1

### Preparing silicate luminescent material of Li₂Ca_{0.85}SiO₄:Tb_{0.15},Au_{1×10-2}

### Preparation of collosol containing Au

Weighing 41.2mg of AuCl₃·HCl·4H₂O, dissolving it in 16.7mL of deionized water; after AuCl₃·HCl·4H₂O had been completely dissolved, weighing 14mg of sodium citrate and 6mg of cetyl trimethyl ammonium bromide and dissolving them in deionized water solution of AuCl₃·HCl·4H₂O under magnetic stirring; weighing 1.9mg of sodium borohydride and 17.6mg of ascorbic acid and dissolving them into 10mL of deionized water separately, then obtaining 10mL sodium borohydride solution with concentrate of 5×10⁻³mol/L and 10mL of ascorbic acid solution with concentrate of 1×10⁻²mol/L. Adding 0.08mL of sodium borohydride solution into deionized water solution of AuCl₃·HCl·4H₂O, stirring for 5min and then adding 3.22mL of ascorbic acid solution with concentrate of 1×10⁻²mol/L into deionized water solution of AuCl₃·HCl·4H₂O, and keep for reaction for 30min, and obtaining 20mL of collosol containing nanoparticles of Au in which the concentrate of Au is 5×10⁻³mol/L.

### Preparation of silicon dioxide aerogel containing Au

Weighing 0.3005g of silicon dioxide aerogel, dissolving it in 10ml of collosol containing nanoparticles of Au in which the concentrate of Au is 5×10⁻³mol/L to obtain mixture solution, stirring mixture solution at 50°C for 3 hours, and sonicating for 10min, then drying at 60°C, grinding solid material obtained from drying, calcining said solid material at 600°C for 4 hours to obtain silicon dioxide aerogel containing Au.

### Preparation of silicate luminescent material of Li₂Ca_{0.85}SiO₄:Tb_{0.15}, Au_{1×10⁻²}

Weighing 0.1195g of Li₂O, 0.1904g of CaO, 0.1121g of Tb₄O₇ and 0.2405g of silicon dioxide aerogel containing Au, grinding uniformly in agate mortar to form a mixture material powder, then placing the mixture material powder into corundum crucible, heating the mixture material powder in muffle furnace at 500°C for 15 hours and then calcining in tube furnace under C powder reducing atmosphere at 1000°C for 2 hours, cooling to room temperature, and grinding to obtain silicate luminescent material of Li₂Ca_{0.85}SiO₄:Tb_{0.15},Au_{1×10-2}.

### Example 2

### Preparing silicate luminescent material of Li₂Ca_{0.98}SiO₄:Tb_{0.02},Pt_{5×10-3}

### Preparation of collosol containing Pt

Weighing 25.9mg of H₂PtCl₆·6H₂O, dissolving it in 17mL of deionized water; after H₂PtCl₆·6H₂O had been completely dissolved, weighing 400mg of sodium citrate and 600mg of sodium dodecyl sulfonate and dissolving them in deionized water solution of H₂PtCl₆·6H₂O under magnetic stirring; weighing 1.9mg of sodium borohydride and dissolving it into 10mL of deionized water, then obtaining 10mL sodium borohydride solution with concentrate of 5×10⁻³mol/L, and prepare 10mL of hydrazine hydrate solution with concentrate of 5×10⁻²mol/L. Adding 0.4mL of sodium borohydride solution into deionized water solution of H₂PtCl₆·6H₂O, stirring for 5min and then adding 2.6mL of hydrazine hydrate solution with concentrate of 5×10⁻²mol/L into deionized water solution of H₂PtCl₆·6H₂O, and keep for reaction for 40min, and obtaining 10mL of collosol containing nanoparticles of Pt in which the concentrate of Pt is 2.5×10⁻³mol/L.

### Preparation of silicon dioxide aerogel containing Pt

Weighing 0.3005g of silicon dioxide aerogel, dissolving it in 10ml of collosol containing nanoparticles of Pt in which the concentrate of Pt is 2.5×10⁻³mol/L to obtain mixture solution, stirring mixture solution at 75°C for 0.5 hours, and sonicating for 10min, then drying at 150°C, grinding solid material obtained from drying, calcining said solid material at 1200°C for 0.5 hours to obtain silicon dioxide aerogel containing Pt.

### Preparation of silicate luminescent material of Li₂Ca_{0.98}SiO₄:Tb_{0.02},Pt_{5×10-3}

Weighing 0.2955g of Li₂CO₃, 0.3924g of CaCO₃, 0.0199g of Tb₂(CO₃)₃ and 0.2404g of silicon dioxide aerogel containing Pt, grinding uniformly in agate mortar to form a mixture material powder, then placing the mixture material powder into corundum crucible, heating the mixture material powder in muffle furnace at 1000°C for 2 hours and then calcining in tube furnace under CO reducing atmosphere at 1200°C for 0.5 hours, cooling to room temperature, and grinding to obtain silicate luminescent material of Li₂Ca_{0.98}SiO₄:Tb_{0.02},Pt_{5×10-3}.

### Example 3

### Preparing silicate luminescent material of Li₂Ca_{0.90}SiO₄:Tb_{0.10},Ag_{2.5×10-4}

### Preparation of collosol containing Ag

Weighing 3.4mg of AgNO₃, dissolving it in 18.4mL of deionized water; after AgNO₃ had been completely dissolved, weighing 42mg of sodium citrate and dissolving it in deionized water solution of AgNO₃ under magnetic stirring; weighing 5.7mg of sodium borohydride into 10mL of deionized water separately, then obtaining 10mL sodium borohydride solution with concentrate of 1.5×10⁻²mol/L. Adding 1.6mL of sodium borohydride solution with concentrate of 1.5×10⁻²mol/L into deionized water solution of AgNO₃, and keep for reaction for 10min, and obtaining 20mL of collosol containing nanoparticles of Ag in which the concentrate of Ag is 1×10⁻³mol/L.

### Preparation of silicon dioxide aerogel containing Ag

Weighing 0.7212g of silicon dioxide aerogel, dissolving it in 3ml of collosol containing nanoparticles of Ag in which the concentrate of Ag is 1×10⁻³mol/L to obtain mixture solution, stirring mixture solution at 60°C for 2 hours, and sonicating for 10min, then drying at 80°C, grinding solid material obtained from drying, calcining said solid material at 800°C for 2 hours to obtain silicon dioxide aerogel containing Ag.

### Preparation of silicate luminescent material of Li₂Ca_{0.90}SiO₄:Tb_{0.10},Ag_{2.5×10-4}

Weighing 0.2955g of Li₂CO₃, 0.2016g of CaO, 0.0747g of Tb₄O₇ and 0.2524g of silicon dioxide aerogel containing Ag, grinding uniformly in agate mortar to form a mixture material powder, then placing the mixture material powder into corundum crucible, heating the mixture material powder in muffle furnace at 600°C for 4 hours and then calcining in tube furnace under mixed gases of N₂ and H₂ reducing atmosphere at 1000°C for 4 hours, cooling to room temperature, and grinding to obtain silicate luminescent material of Li₂Ca_{0.90}SiO₄:Tb_{0.10},Ag_{2.5×10-4}.

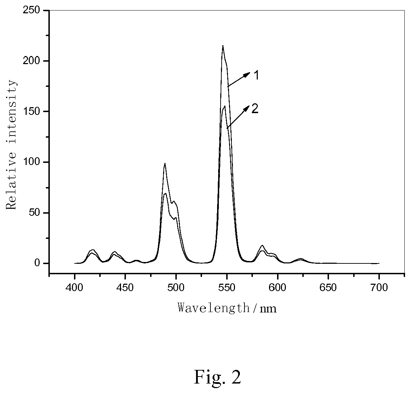

Fig. 2 is a cathodoluminescence spectrum of silicate luminescent material Li₂Ca_{0.90}SiO₄:Tb_{0.10},Ag_{2.5×10}-4 excited by cathode ray under 3kv acceleration voltage in Example 3 with respect to silicate luminescent material Li₂Ca_{0.90}SiO₄:Tb_{0.10} which is tested under the same conditions. Wherein, curve 1 is spectrum of silicate luminescent material Li₂Ca_{0.90}SiO₄:Tb_{0.10},Ag_{2.5×10-4}, and curve 2 is spectrum of silicate luminescent material Li₂Ca_{0.90}SiO₄:Tb_{0.10}.

### Example 4

### Preparing silicate luminescent material of Li₂Ca_{0.80}SiO₄:Tb_{0.20},Pd_{1×10-5}

### Preparation of collosol containing Pd

Weighing 0.22mg of PdCl₂·2H₂O, dissolving it in 10mL of deionized water; after PdCl₂·2H₂O had been completely dissolved, weighing 11.0mg of sodium citrate and 4.0mg of sodium dodecyl sulfate and dissolving them in deionized water solution of PdCl₂·2H₂O under magnetic stirring; weighing 0.38mg of sodium borohydride and dissolving it into 100mL of deionized water, then obtaining sodium borohydride solution with concentrate of 1×10⁻⁴mol/L. Adding 10mL of sodium borohydride solution with concentrate of 1×10⁻⁴mol/L into deionized water solution of PdCl₂·2H₂O under magnetic stirring, and keep for reaction for 20min, and obtaining 20mL of collosol containing nanoparticles of Pd in which the concentrate of Pd is 5×10⁻⁵mol/L.

### Preparation of silicon dioxide aerogel containing Pd

Weighing 0.9015g of silicon dioxide aerogel, dissolving it in 3ml of collosol containing nanoparticles of Pd in which the concentrate of Pd is 5×10⁻⁵mol/L to obtain mixture solution, stirring mixture solution at 65°C for 1.5 hours, and sonicating for 10min, then drying at 120°C, grinding solid material obtained from drying, calcining said solid material at 1100°C for 2 hours to obtain silicon dioxide aerogel containing Pd.

### Preparation of silicate luminescent material of Li₂Ca_{0.80}SiO₄:Tb_{0.20},Pd_{1×10-5}

Weighing 0.4076g of Li₂C₂O₄, 0.4096g of CaC₂O₄, 0.2327g of Tb₂(C₂O₄)₃ and 0.2404g of silicon dioxide aerogel containing Pd, grinding uniformly in agate mortar to form a mixture material powder, then placing the mixture material powder into corundum crucible, heating the mixture material powder in muffle furnace at 700°C for 5 hours and then calcining in tube furnace under pure H₂ reducing atmosphere at 800°C for 6 hours, cooling to room temperature, and grinding to obtain silicate luminescent material of Li2Ca_{0.80}SiO₄:Tb_{0.20},Pd_{1×10-5}.

### Example 5

### Preparing silicate luminescent material of Li₂Ca_{0.95}SiO₄:Tb_{0.05},Cu_{1×10-4}

### Preparation of collosol containing Cu

Weighing 1.6mg of Cu(NO₃)₂, dissolving it in 16mL of ethanol; after Cu(NO₃)₂ had been completely dissolved, weighing 12mg of polyvinyl pyrrolidone and dissolving it in ethanol solution of Cu(NO₃)₂ under stirring; weighing 0.4mg of sodium borohydride in 10mL of ethanol, then obtaining 10mL sodium borohydride solution with concentrate of 1×10⁻³mol/L. Keep for reaction for 10min, and obtaining 20mL of collosol containing nanoparticles of Cu in which the concentrate of Cu is 4×10⁻⁴mol/L.

### Preparation of silicon dioxide aerogel containing Cu

Weighing 0.7212g of silicon dioxide aerogel, dissolving it in 3ml of collosol containing nanoparticles of Cu in which the concentrate of Cu is 4×10⁻⁴mol/L to obtain mixture solution, stirring mixture solution at 65°C for 1.5 hours, and sonicating for 10min, then drying at 110°C, grinding solid material obtained from drying, calcining said solid material at 900°C for 3 hours to obtain silicon dioxide aerogel containing Cu.

### Preparation of silicate luminescent material of Li₂Ca_{0.95}SiO₄:Tb_{0.05},Cu_{1×10-4}

Weighing 0.5516g of LiNO₃, 0.6232g of Ca(NO₃)₂, 0.0689g of Tb(NO₃)₃ and 0.2404g of silicon dioxide aerogel containing Cu, grinding uniformly in agate mortar to form a mixture material powder, then placing the mixture material powder into corundum crucible, heating the mixture material powder in muffle furnace at 600°C for 4 hours and then calcining in tube furnace under mixed gases of N₂ and H₂ reducing atmosphere at 1000°C for 6 hours, cooling to room temperature, and grinding to obtain silicate luminescent material of Li₂Ca_{0.95}SiO₄:Tb_{0.05},Cu_{1×10-4}.

### Example 6

### Preparing silicate luminescent material of Li₂Ca_{0.88}SiO₄:Tb_{0.12},Ag_{5×10-4}

### Preparation of collosol containing Ag

Weighing 0.0429mg of AgNO₃, 2.932mg sodium citrate and 0.05g PVP separately, and preparing 10mL AgNO₃ solution with concentrate of 0.025mol/L, 10mL sodium citrate solution with concentrate of 1mol/L and 10mL PVP solution with concentrate of 5mg/mL separately. Adding 2mL AgNO₃ solution into 30 mL deionized water and then adding 4mL said PVP solution, stirring, heating at 100°C , and then adding 4mL sodium citrate solution, keep for reaction for 15min, and obtaining 40mL of collosol containing nanoparticles of Ag in which the concentrate of Ag is 1.25×10⁻³mol/L.

### Preparation of silicon dioxide aerogel containing Ag

Weighing 0.6010g of silicon dioxide aerogel, dissolving it in 4ml of collosol containing nanoparticles of Ag in which the concentrate of Ag is 1.25×10^{- 5}mol/L to obtain mixture solution, stirring mixture solution at 70°C for 1 hours, and sonicating for 10min, then drying at 80°C, grinding solid material obtained from drying, calcining said solid material at 800°C for 3 hours to obtain silicon dioxide aerogel containing Ag.

### Preparation of silicate luminescent material of Li₂Ca_{0.88}SiO₄:Tb_{0.12},Ag_{5×10-4}

Weighing 0.2955g of Li₂CO₃, 0.4506g of CaC₂O₄, 0.1396g of Tb₂(C₂O₄)₃ and 0.2404g of silicon dioxide aerogel containing Ag, grinding uniformly in agate mortar to form a mixture material powder, then placing the mixture material powder into corundum crucible, heating the mixture material powder in muffle furnace at 500°C for 10 hours and then calcining in tube furnace under pure H₂ reducing atmosphere at 1100°C for 3 hours, cooling to room temperature, and grinding to obtain silicate luminescent material of Li₂Ca_{0.88}SiO₄:Tb_{0.12},Ag_{5×10-4}.

### Example 7

### Preparing silicate luminescent material of Li₂Ca_{0.92}SiO₄:Tb_{0.08}, (Ag_{0.5}/Au_{0.5})_{1.25×10-3}

### Preparation of collosol containing Ag and Au

Weighing 6.2mg of AuCl₃·HCl·4H₂O and 2.5mg of AgNO₃, dissolving them in 28mL of deionized water; after they had been completely dissolved, weighing 22mg of sodium citrate and 20mg PVP and dissolving them in deionized water solution of AuCl₃·HCl·4H₂O and AgNO₃ under magnetic stirring; weighing 5.7mg of sodium borohydride and dissolving it into 10mL of deionized water separately, then obtaining 10mL sodium borohydride solution with concentrate of 1.5×10⁻²mol/L. Adding 2mL of sodium borohydride solution with concentrate of 1.5×10⁻²mol/L into deionized water solution of AuCl₃·HCl·4H₂O and AgNO₃, and keep for reaction for 20min, and obtaining 30mL of collosol containing nanoparticles of Ag and Au in which the total concentrate of metal of Ag and Au is 1×10⁻³mol/L.

### Preparation of silicon dioxide aerogel containing Ag and Au

Weighing 0.4808g of silicon dioxide aerogel, dissolving it in 10ml of collosol containing nanoparticles of Ag and Au in which the concentrate of Ag and Au is 1×10⁻³mol/L to obtain mixture solution, stirring mixture solution at 75°C for 1 hours, and sonicating for 10min, then drying at 100°C, grinding solid material obtained from drying, calcining said solid material at 1000°C for 4 hours to obtain silicon dioxide aerogel containing Ag and Au.

### Preparation of silicate luminescent material of Li₂Ca_{0.92}SiO₄:Tb_{0.08}, (Ag_{0.5}/Au_{0.5})_{1.25×10-3}

Weighing 0.5279g of CH₃COOLi, 0.5821g of (CH₃COO)₂Ca, 0.1075g of (CH₃COO)₃Tb and 0.2524g of silicon dioxide aerogel containing Ag and Au, grinding uniformly in agate mortar to form a mixture material powder, then placing the mixture material powder into corundum crucible, heating the mixture material powder in muffle furnace at 700°C for 8 hours and then calcining in tube furnace under mixed gases of N₂ and H₂ reducing atmosphere at 900°C for 5 hours, cooling to room temperature, and grinding to obtain silicate luminescent material of Li₂Ca_{0.92}SiO₄:Tb_{0.08}, (Ag_{0.5}/Au_{0.5})_{1.25×10⁻³}.

## Claims

1. A method for preparing a silicate luminescent material, comprising:
preparing collosol containing M, said M is selected from at least one of Ag, Au, Pt, Pd, and Cu metal nanoparticles;
mixing said collosol containing M and silicon dioxide aerogel to obtain mixture solution, stirring said mixture solution and then sonicating and drying, grinding solid material obtained from drying, calcining said solid material at 600°C to 1200°C for 0.5 to 4 hours to obtain silicon dioxide aerogel containing M;
selecting source compound of Li, source compound of Ca, source compound of Tb and said silicon dioxide aerogel containing M according to stoichiometric ratios of corresponding elements in general molecular formula of Li₂Ca₁₋ₓSiO₄:Tbₓ,M_{y}, mixing and grinding uniformly to form a mixture material, calcining said mixture material at 500°C to 1000°C for 2 to 15 hours, and reducing said mixture material at 800°C to 1200°C for 0.5 to 6 hours, cooling and grinding to obtain silicate luminescent material has a general molecular formula of Li₂Ca₁₋ₓSiO₄:Tbₓ,M_{y}, x is in a range of 0<x≤0.2,
M is doped in said Li₂Ca₁₋ₓSiO₄:Tbₓ, and y is a molar ratio of M to Si and y is in a range of 0<y≤1×10⁻².

2. The method for preparing said silicate luminescent material as in claim 1, wherein said preparing collosol containing M comprising: mixing at least one solution of salt selected from silver salt solution, gold salt solution, platinum salt solution, palladium salt solution and copper salt solution, with assistant agent and reducing agent to have reaction for 10∼45 minutes to obtain collosol containing M.

3. The method for preparing said silicate luminescent material as in claim 2, wherein a concentration of at least one solution of salt selected from silver salt solution, gold salt solution, platinum salt solution, palladium salt solution and copper salt solution is in a range of 5×10⁻⁴mol/L to 2.5×10⁻²mol/L.

4. The method for preparing said silicate luminescent material as in claim 1, wherein said assistant agent is selected from at least one of polyvinyl pyrrolidone, sodium citrate, cetyl trimethyl ammonium bromide, sodium dodecyl sulfate and sodium dodecyl sulfonate;
a concentration of said assistant agent in collosol containing M is in a range of 1×10⁻⁴g/mL to 5×10⁻²g/mL;
said reducing agent is selected from at least one of hydrazine hydrate, ascorbic acid, sodium citrate and sodium borohydride;
a molar ratio of said reducing agent to metal ion in at least one solution of salt selected from silver salt solution, gold salt solution, platinum salt solution, palladium salt solution and copper salt solution is in a range of 0.5:1 to 10:1.

5. The method for preparing said silicate luminescent material as in claim 1, wherein said stirring mixture and then sonicating and drying comprising: stirring said mixture solution at 50°C to 75°C for 0.5 to 3 hours, and sonicating for 10 minutes, then drying at 60°C to 150°C.

6. The method for preparing said silicate luminescent material as in claim 1, wherein said source compound of Li is one of lithium oxide, lithium carbonate, lithium nitrate, lithium acetate and lithium oxalate, said source compound of Ca is one of calcium oxide, calcium carbonate, calcium nitrate, calcium acetate and calcium oxalate, and said source compound of Tb is one of terbium oxide, terbium carbonate, terbium nitrate, terbium acetate and terbium oxalate.

7. The method for preparing said silicate luminescent material as in claim 1, wherein said reducing at 800°C to 1200°C for 0.5 to 6 hours comprising: reducing under reducing atmosphere at 800°C to 1200°C for 0.5 to 6 hours, and said reducing atmosphere is selected from at least one of mixed gases of N₂ and H₂ reducing atmosphere, CO reducing atmosphere, and H₂ reducing atmosphere.

## Patentansprüche

1. Verfahren zur Herstellung eines lumineszierenden Silicatmaterials, das Folgendes umfasst:
Herstellen von M enthaltendem Collosol, wobei M aus zumindest einem von Ag-, Au-, Pt-, Pd- und Cu-Metallnanopartikeln ausgewählt ist;
Vermischen des M enthaltenden Collosols und Siliciumdioxid-Aerogels, um ein Lösungsgemisch zu erhalten, Rühren des Lösungsgemischs und dann Beschallen und Trocknen, Mahlen des festen Materials, das nach dem Trocknen erhalten wurde, Calcinieren des festen Materials 0,5 bis 4 h lang bei 600 °C bis 1200 °C, um M enthaltendes Siliciumdioxid-Aerogel zu erhalten;
Auswählen einer Quellverbindung von Li, einer Quellverbindung von Ca, einer Quellverbindung von Tb und des M enthaltenden Siliciumdioxid-Aerogels gemäß stöchiometrischen Verhältnissen von entsprechenden Elementen in der allgemeinen Molekülformel von Li₂Ca₁₋ₓSiO₄:Tbₓ,M_{y}, Vermischen und einheitliches Vermahlen, um ein Materialgemisch zu bilden, Calcinieren des Materialgemischs 2 bis 15 h lang bei 500 °C bis 1000 °C und Reduzieren des Materialgemischs 0,5 bis 6 h lang bei 800 °C bis 1200 °C, Kühlen und Mahlen, um lumineszierendes Silicatmaterial zu erhalten, das eine allgemeine Molekülformel Li₂Ca₁₋ₓSiO₄:Tbₓ,M_{y} aufweist, wobei x im Bereich von 0 < x ≤ 0,2 liegt, M in dem Li₂Ca₁₋ₓSiO₄:Tbₓ dotiert ist und y ein Molverhältnis von M zu Si ist und y in einem Bereich von 0 < y ≤ 1 x 10⁻² liegt.

2. Verfahren zur Herstellung eines lumineszierenden Silicatmaterials nach Anspruch 1, wobei das Herstellen von M enthaltendem Collosol Folgendes umfasst:
Vermischen von zumindest einer Salzlösung, die aus Silbersalzlösung, Goldsalzlösung, Platinsalzlösung, Palladiumsalzlösung und Kupfersalzlösung ausgewählt ist, mit einem Hilfsmittel und einem Reduktionsmittel, um eine 10- bis 40-minütige Reaktion herbeizuführen, um M enthaltendes Collosol zu erhalten.

3. Verfahren zur Herstellung eines lumineszierenden Silicatmaterials nach Anspruch 2, wobei eine Konzentration von zumindest einer Salzlösung, ausgewählt aus Silbersalzlösung, Goldsalzlösung, Platinsalzlösung, Palladiumsalzlösung und Kupfersalzlösung, in einem Bereich von 5 x 10⁻⁴ mol/l bis 2,5 x 10⁻² mol/l liegt.

4. Verfahren zur Herstellung eines lumineszierenden Silicatmaterials nach Anspruch 1, wobei das Hilfsmittel aus zumindest einem aus Polyvinylpyrrolidon, Natriumcitrat, Cetyltrimethylammoniumbromid, Natriumdodecylsulfat und Natriumdodecylsulfonat ausgewählt ist;
eine Konzentration des Hilfsmittels in M enthaltendem Collosol in einem Bereich von 1 x 10⁻⁴ g/ml bis 5 x 10⁻² g/ml liegt;
das Reduktionsmittel aus zumindest einem von Hydrazinhydrat, Ascorbinsäure, Natriumcitrat und Natriumborhydrid ausgewählt ist;
ein Molverhältnis des Reduktionsmittels zu Metallionen in zumindest einer Salzlösung, ausgewählt aus Silbersalzlösung, Goldsalzlösung, Platinsalzlösung, Palladiumsalzlösung und Kupfersalzlösung, in einem Bereich von 0,5:1 bis 10:1 liegt.

5. Verfahren zur Herstellung eines lumineszierenden Silicatmaterials nach Anspruch 1, wobei das Rühren des Gemischs und danach das Beschallen und Trocknen Folgendes umfasst: Rühren des Lösungsgemischs 0,5 bis 3 h lang bei 50 °C bis 75 °C und 10-minütiges Beschallen, danach Trocknen bei 60 °C bis 150 °C.

6. Verfahren zur Herstellung eines lumineszierenden Silicatmaterials nach Anspruch 1, wobei die Quellverbindung von Li eine aus Lithiumoxid, Lithiumcarbonat, Lithiumnitrat, Lithiumacetat und Lithiumoxalat ist, wobei die Quellverbindung von Ca eine aus Calciumoxid, Calciumcarbonat, Calciumnitrat, Calciumacetat und Calciumoxalat ist und die Quellverbindung von Tb eine aus Terbiumoxid, Terbiumcarbonat, Terbiumnitrat, Terbiumacetat und Terbiumoxalat ist.

7. Verfahren zur Herstellung eines lumineszierenden Silicatmaterials nach Anspruch 1, wobei das Reduzieren 0,5 bis 6 h lang bei 800 °C bis 1200 °C Folgendes umfasst: Reduzieren in einer reduzierenden Atmosphäre 0,5 bis 6 h lang bei 800 °C bis 1200 °C und wobei die reduzierende Atmosphäre aus zumindest einer aus einer reduzierenden Atmosphäre aus einem Gasgemisch von N₂ und H₂, einer reduzierenden CO-Atmosphäre und einer reduzierenden H₂-Atmosphäre ausgewählt ist.

## Revendications

1. Procédé de préparation d'un matériau luminescent de type silicate, comprenant :
la préparation d'un collosol contenant M, ledit M étant choisi parmi au moins une des nanoparticules de métal Ag, Au, Pt, Pd, et Cu ;
le mélange dudit collosol contenant M et d'un aérogel de dioxyde de silicium pour obtenir une solution de mélange, l'agitation de ladite solution de mélange puis sonication et séchage, le broyage du matériau solide issu du séchage, la calcination dudit matériau solide entre 600 °C et 1200 °C pendant 0,5 à 4 heures pour obtenir un aérogel de dioxyde de silicium contenant M ;
la sélection d'un composé de Li source, d'un composé de Ca source, d'un composé de Tb source et dudit aérogel de dioxyde de silicium contenant M en fonction de rapports stoechiométriques des éléments correspondants dans la formule brute générale Li₂Ca₁₋ₓSiO₄:Tbₓ,M_{y}, le mélange et le broyage uniforme pour former un matériau de mélange, la calcination dudit matériau de mélange entre 500 °C et 1000 °C pendant 2 à 15 heures, et la réduction dudit matériau de mélange entre 800 °C et 1200 °C pendant 0,5 à 6 heures, le refroidissement et le broyage pour obtenir un matériau luminescent de type silicate qui a comme formule brute générale Li₂Ca₁₋ₓSiO₄:Tbₓ,M_{y}, x étant compris dans l'intervalle 0<x≤0,2, M étant dopé dans ledit Li₂Ca₁₋ₓSiO₄:Tbₓ, et y étant un rapport molaire de M à Si et y étant compris dans l'intervalle 0<y≤1x10⁻².

2. Procédé de préparation dudit matériau luminescent de type silicate selon la revendication 1, dans lequel ladite préparation du collosol contenant M comprend : le mélange d'au moins une solution de sel choisie parmi une solution de sel d'argent, une solution de sel d'or, une solution de sel de platine, une solution de sel de palladium et une solution de sel de cuivre, à l'aide d'un agent auxiliaire et d'un agent réducteur pour avoir une réaction pendant 10∼45 minutes pour obtenir le collosol contenant M.

3. Procédé de préparation dudit matériau luminescent de type silicate selon la revendication 2, dans lequel une concentration d'au moins une solution de sel choisie parmi une solution de sel d'argent, une solution de sel d'or, une solution de sel de platine, une solution de sel de palladium et une solution de sel de cuivre est comprise dans l'intervalle allant de 5x10⁻⁴ mol/L à 2,5x10⁻² mol/L.

4. Procédé de préparation dudit matériau luminescent de type silicate selon la revendication 1, dans lequel ledit agent auxiliaire est choisi parmi au moins un des suivants : polyvinylpyrrolidone, citrate de sodium, bromure de cétyltriméthylammonium, dodécylsulfate de sodium et dodécylsulfonate de sodium ;
une concentration dudit agent auxiliaire dans le collosol contenant M est comprise dans l'intervalle allant de 1x10⁻⁴ g/mL à 5x10⁻² g/mL ;
ledit agent réducteur est choisi parmi au moins un des suivants : hydrate d'hydrazine, acide ascorbique, citrate de sodium et borohydrure de sodium ;
un rapport molaire dudit agent réducteur à l'ion métallique dans au moins une solution de sel choisie parmi une solution de sel d'argent, une solution de sel d'or, une solution de sel de platine, une solution de sel de palladium et une solution de sel de cuivre est compris dans l'intervalle allant de 0,5:1 à 10:1.

5. Procédé de préparation dudit matériau luminescent de type silicate selon la revendication 1, dans lequel ladite agitation du mélange puis la sonication et le séchage comprennent : une agitation de ladite solution de mélange entre 50 °C et 75 °C pendant 0,5 à 3 heures, et une sonication pendant 10 minutes, puis un séchage entre 60 °C et 150 °C.

6. Procédé de préparation dudit matériau luminescent de type silicate selon la revendication 1, dans lequel ledit composé de Li source est un des suivants : oxyde de lithium, carbonate de lithium, nitrate de lithium, acétate de lithium et oxalate de lithium, ledit composé de Ca source est un des suivants : oxyde de calcium, carbonate de calcium, nitrate de calcium, acétate de calcium et oxalate de calcium, et ledit composé de Tb source est un des suivants : oxyde de terbium, carbonate de terbium, nitrate de terbium, acétate de terbium et oxalate de terbium.

7. Procédé de préparation dudit matériau luminescent de type silicate selon la revendication 1, dans lequel ladite réduction entre 800 °C et 1200 °C pendant 0,5 à 6 heures comprend : une réduction sous atmosphère réductrice entre 800 °C et 1200 °C pendant 0,5 à 6 heures, ladite atmosphère réductrice étant choisie parmi au moins une des suivantes : atmosphère réductrice de N₂ et H₂ gazeux mélangés, atmosphère réductrice de CO, et atmosphère réductrice de H₂.
